Europäisches Patentamt

(19) European Patent Office

Office européen des brevets

(11) EP 0 678 403 B1

(12) EUROPEAN PATENT SPECIFICATION

(45) Date of publication and mention
of the grant of the patent:
17.09.1997 Bulletin 1997/38

(51) Int. Cl.⁶: **B60C 11/13**, B60C 11/04,
B60C 11/00

(21) Application number: 95302358.7

(22) Date of filing: 10.04.1995

(54) **Pneumatic tyre**

Luftreifen

Bandage pneumatique

(84) Designated Contracting States:
DE FR GB

(30) Priority: 13.04.1994 JP 100828/94

(43) Date of publication of application:
25.10.1995 Bulletin 1995/43

(73) Proprietor: **Sumitomo Rubber Industries Ltd.**
**Kobe-shi, Hyogo-ken (JP)**

(72) Inventor: **Katayama, Hiroyuki**
**Akashi-shi, Hyogo-ken (JP)**

(74) Representative: **Stewart, Charles Geoffrey**
**SP TYRES UK LIMITED**
**Technical Division**
**Fort Dunlop, Erdington, Birmingham B24 9QT**
**(GB)**

(56) References cited:
EP-A- 0 590 526                EP-A- 0 593 288
FR-A- 383 476                FR-A- 2 608 516
US-A- 4 044 810

• PATENT ABSTRACTS OF JAPAN vol. 13 no. 22
(M-786) ,19 January 1989 & JP-A-63 235106
(SUMITOMO RUBBER IND.,CO. LTD) 30
September 1988,

## Description

The present invention relates to a pneumatic tyre, particularly a low aspect radial tyre for passenger vehicles, capable of providing higher wet grip performance, steering stability, dry grip performance and reduction of pass-by noise.

Recently, as automobiles become quieter tyre noise has come to contribute at a higher ratio to the total noise level of an automobile, and its reduction is demanded. Such noise reduction is specifically desired in a range around 1 kHz which forms the peak frequency of tyre noise, and sounds due to a columnar resonance generated by the circumferential grooves is one of the main sound sources in such a frequency range.

On the other hand, in order to maintain the wet grip performance, the tread of a tyre is generally provided with a plurality of circumferential grooves continuously extending in the circumferential direction of tyre.

In such a tyre, when it is in contact with the ground, a kind of air column is formed by the road surface and the circumferential groove. Then a sound of a specific wavelength, which is double the wave length of the air column, is generated by airflow within the column during running of the vehicle.

This phenomenon is referred to as columnar resonance, and provides the main source of noise at 800 to 1.2 kHz. The wavelength of the columnar resonance sound is approximately constant to give a constant frequency regardless of the tyre's speed, and increases the sound levels inside and outside an automobile.

Incidentally, since this noise around 1 khz is a sound easily heard by the human ear, increase of noise with this frequency greatly influences perceived tyre noise performance.

In order to prevent the columnar resonance, although reduction of the number or volume of the circumferential grooves is known, such reductions lead to lower wet grip performance.

On the other hand, although the wet grip performance can be increased contrarily by increasing the number or volume of circumferential grooves such a simple increase, however, causes reduction of the dry grip performance, because the ground-contact area is reduced. Also, it causes a reduction of steering stability as the rigidity of the tread pattern is reduced.

Furthermore, along with the recent trend of increase in the highway networks and higher speed of vehicles, tyres are strongly required to have improved dry grip performance and steering stability in straight running and cornering.

A known tyre comprising the features of the preamble of claim 1 is shown e.g. by FR-A-2 608 516.

However, conventionally, a tyre's performance factors have been adjusted by sacrificing one or more other performance factors.

It is hence an object of the invention to provide a pneumatic tyre having improved dry and wet grip performances and steering stability while preventing columnar resonance so as to reduce tyre noise.

According to the present invention, a pneumatic tyre comprises a tread part having two circumferential grooves each with a groove bottom continuously extending in the circumferential direction on either side of the tyre's equator so as to divide the tread part into a pair of shoulder parts, which are located outside outer bottom edges of the circumferential grooves in the axial direction of tyre, and a central part, which is located between inner bottom edges of the circumferential grooves in the axial direction of tyre; characterised in that the central part has a surface comprising successive convex curves composed of a pair of inner groove walls extending inside, in the axial direction of tyre, along a curve convex outwardly in the radial direction from the inner bottom edges of the circumferential grooves and a central ground-contacting surface smoothly connected between the pair of the inner groove walls, the central ground-contacting surface is substantially in contact with a virtual tread line between outer surfaces of the shoulder parts, the circumferential grooves have an outer groove wall extending outwards, in the axial direction of tyre, along a curve composed of at least two arc sections from the outer bottom edges of the circumferential grooves and smoothly connected to the outer surface of the shoulder part, and have a groove width GW measured between the inner and outer groove walls at a radial position above the groove bottom by a distance of 2/3 times the groove depth D of the circumferential groove measured from the groove bottom to the virtual tread line being not less than 35 mm and not more than 0.35 times a ground-contacting width TW of the tread.

The curve of the outer groove wall may be composed of a concave lower arc section with a radius of curvature R3 extending concavely from the outer bottom edge and a convex upper arc section with a radius of curvature R4 extending convexly in contact with the concave lower arc section and the outer surface of the shoulder part. The radii of curvature R3, R4 are preferably 3 mm or more.

An embodiment of the present invention will now be described, by way of example, referring to the attached diagrammatic drawings, in which:

Fig. 1 is a sectional view showing an embodiment of the invention;

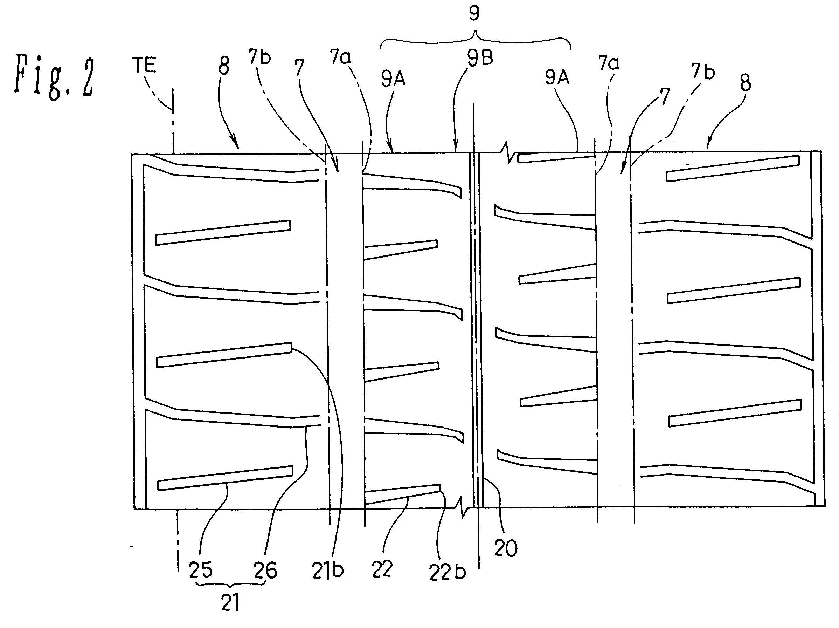

Fig. 2 is a partial flat view showing a tread pattern;
Fig. 3 is a enlarged sectional view showing a central part configuration;
Fig. 4(A) is an enlarged partial sectional view showing another example of an outer groove wall;
Fig. 4(B) is an enlarged partial sectional view showing still another example of an outer groove wall;
Fig. 4(C) is an enlarged partial sectional view showing still another example of an outer groove wall;

Fig. 5 is a graph showing the relation between the groove width and noise generation;

Fig. 6 is a graph showing the relation between the total groove width ratio and cornering power;

Fig. 7 is a graph showing the relation between the total groove width ratio and hydroplaning-inducing speed;

Fig. 8 is a sectional view of a tyre showing another example of a central part configuration;

Fig. 9 is a plan view showing the ground-contacting tread area of the tyre in Fig. 1 when a normal load is applied;

Fig. 10 is a sectional view showing a tread profile of a conventional tyre; and

Fig. 11 is a sectional view showing a tread profile of a comparative tyre in Table 1.

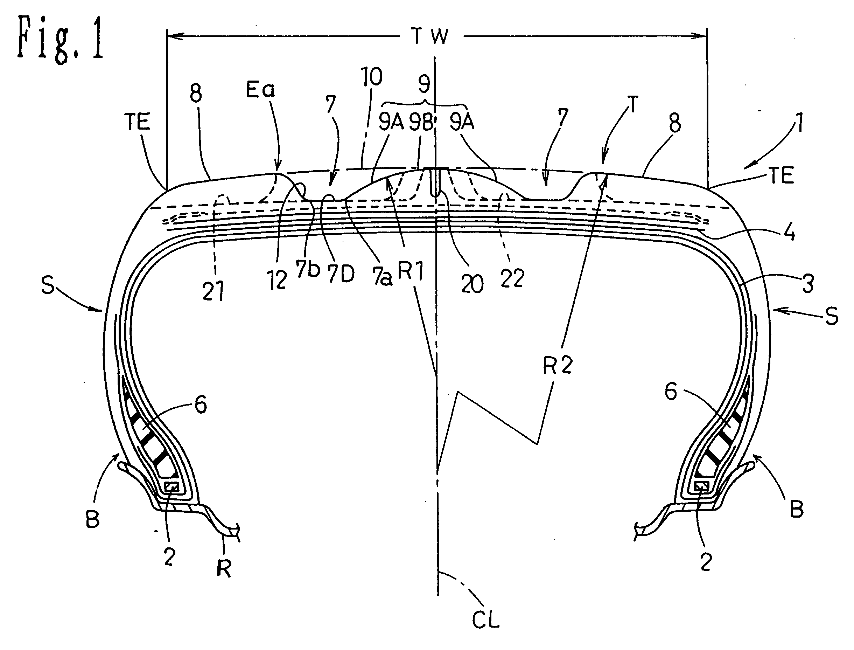

Fig. 1 shows a tyre 1 of the invention in its normal state mounted on its regular rim R and inflated to its regular internal pressure. The regular rim is the rim officially approved for the tyre by for example JATMA (Japan), TRA (USA), ETRTO (Europe) and the like; the regular internal pressure is the maximum air pressure for the tyre officially specified in the Air-pressure/Max.-loads Table by for example JATMA, TRA, ETRTO and the like; and the normal load is the maximum load for the tyre officially specified in Air-pressure/Max.-loads Table by for example JATMA, TRA, ETRTO and the like.

The tyre 1 comprises a pair of bead parts B each having a bead core 2, sidewall parts S extending from the bead parts B outwardly in the radial direction of tyre, and a tread part T linking their outer ends. The aspect ratio is between 0.4 and 0.6 to provide a low aspect tyre for passenger vehicles.

(Aspect ratio = sectional height / tyre width.)

A radial carcass 3 extends between the bead parts B. The edges of the carcass 3 are folded back from the inside to the outside around the bead core 2, and a belt layer 4 is provided above the carcass 3 and radially inwards of the tread part T.

In addition, a rubber bead apex 6 extending radially outwardly from each bead core 2 is provided between the main part of the carcass 3 and the folded back part thereof so as to maintain the shape and rigidity of the bead part B.

The belt layer 4 comprises plural belt plies of cords aligned at an angle of 15 to 30 degrees to the tyre equator CL each coated by a topping rubber. The belt cords have a high tensile strength, such as steel or aromatic polyamide, and are arranged to cross to each other between respective belt plies. For the carcass cords, in the case of a tyre for passenger vehicles, such organic fibre cords such as nylon, rayon or polyester may be generally employed.

The tread part T has two wide circumferential grooves 7, which are positioned one at either side of the tyre's equator CL and each extending continuously substantially in the circumferential direction, so that the tread part T is divided into a pair of shoulder parts 8, 8 and a central part 9.

The circumferential grooves are, in the embodiment, positioned symmetrically about the tyre's equatorial plane. A groove bottom 7D of the circumferential groove 7 is approximately parallel to a virtual tread line 10 connecting between the outer surfaces of the shoulder parts 8, 8. A centre of the groove bottom 7D is located approximately in the middle of tyre's equatorial plane and a ground-contacting tread edge TE. A groove depth D of the circumferential groove 7 measured from the groove bottom 7D to the virtual tread line 10 is set in a range of 4 to 8% of a ground-contacting width TW of the tread such as 7.5 to 15.0 mm, preferably 8.4 mm for a tyre of 205/55R15 in size.

The shoulder parts 8, 8 are defined as the regions outside the outer bottom edges 7b of the circumferential grooves 7,7 in the axial direction of tyre. The central part 9 is defined as the region between the inner bottom edges 7a,7a of the circumferential grooves 7,7 in the axial direction of tyre.

The central part 9 has a surface with a smooth convex curve composed of a pair of inner groove walls 9A extending inside in the axial direction of tyre along a curve convex outwardly in the radial direction of tyre from the inner bottom edges 7a,7a and a central ground-contacting surface 9B smoothly connected between the inner groove walls 9A, 9A.

The central ground-contacting surface 9B is defined as the part of the tread surface which comes in contact with the ground when a normal load is applied to the tyre in the normal state. The ground-contacting tread width TW is the length between the ground-contacting tread ends TE which are outer ends of a ground-contacting surface of the shoulder parts 8 when the normal load is applied.

The central ground-contacting surface 9B is, in the embodiment, substantially in contacting with the virtual tread line 10.

Here, the expression "substantially in contact" means that the minimum distance between the central ground-contacting surface 9B and the virtual tread line 10 is within 2% of the ground-contacting tread width TW. If it is 2% or more, because the difference between the ground-contacting pressures of the shoulder part 8 and central part 9 is increased, the grip performance is reduced, and the wear resistance is affected. Thus, it should be preferably 1% or less, more preferably 0.5% or less.

Additionally, the virtual tread line 10 is defined as the arcuate curve of a single radius of curvature R2 which extends between the axially inner edges Ea, Ea of the outer surfaces of the shoulder parts 8, 8 and is in contact with tangent lines to the outer surfaces of the shoulder parts 8, 8 at the axially inner edges Ea,Ea. When the tangent is approximately parallel, the virtual tread line 10 is formed as a straight line between the inner edges Ea,Ea.

In the invention, the convex central part 9 provides, in the centre of tyre, a sub-tread having a radius of curvature which is comparatively small and a width sufficiently narrower than the tyre's width, thus, the hydroplaning phenomenon is prevented, and the wet grip performance is increased. The reduction of the radius of curvature of the central part 9, specifically that of the central ground-contacting surface 9B, increases the water draining performance to the outside in both directions, and enhances the water clearing effect on a wet road.

Incidentally, in the case where the radius of curvature R2 of the virtual tread line 10 is also reduced, the grip performance on a dry road and steering stability in cornering are reduced due to a reduction of ground contact area. Therefore, the radius of curvature R2 should be comparatively large, preferably 3 times the ground-contacting tread width TW or more. It is also allowable for the outer surface of the shoulder parts 8 to be approximately a straight line parallel with the tyre's axis.

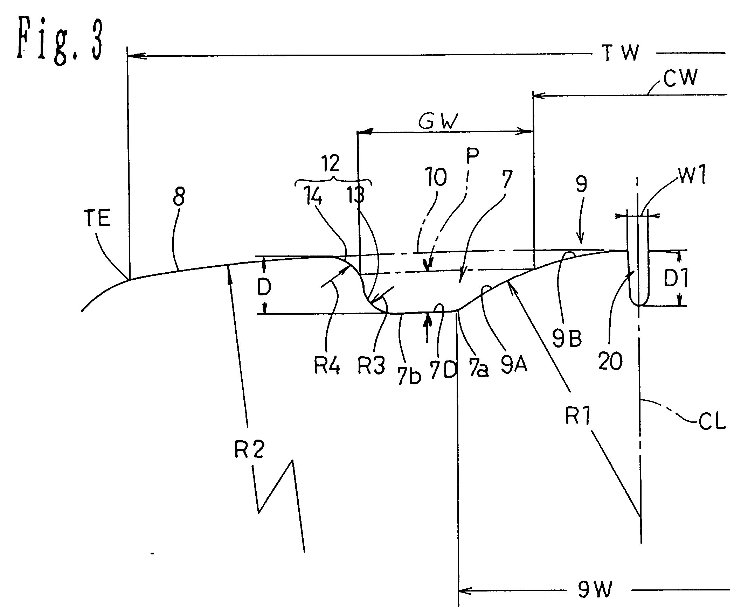

Figs. 1 and 3 show an example wherein all the surface of the central part 9 is formed by an arc with a single radius of curvature R1 inscribed with the virtual tread line 10. The radius of curvature R1 as well as the radius of curvature R2 has its centre on the tyre's equatorial plane. The radius of curvature R1 is sufficiently smaller than the radius of curvature R2, preferably within a range of 0.5 to 1.5 times the ground-contacting tread width TW. If it is less than 0.5 times, the width CW of the central ground-contacting surface 9B is too reduced, and the dry grip performance tends to be significantly reduced. If it is more than 1.5 times, the draining effect is insufficient, and the wet grip performance is inferior.

In order to maintain the performance factors such as dry grip performance, wear resistance and steering stability, the width CW of the central ground-contact surface 9B is about 5 to 40%, preferably 15 to 35% of the ground-contact tread width TW. In addition, it is preferable that the width 9W of the central part 9, that is the distance between the inner groove bottom edges 7a,7a is about 40 to 55% of the ground-contact tread width TW.

Concerning the shoulder part 8, an outer groove wall 12 which extends from the outer groove bottom edge 7b along a curve composed of at least two arc sections is connected smoothly to the outer surface of the shoulder part 8. The curve of the outer groove wall 12, in the embodiment, is composed of a concave lower arc section 13 with a radius of curvature R3, which is in contact with the groove bottom 7D at the outer bottom edge 7b and extends concavely outwardly in the radial direction, and a convex upper arc section 14 with a radius of curvature R4, which extends convexly outwardly in the radial direction and is in contact with the concave lower arc section 13 and the outer surface of the shoulder part 8. As mentioned above, since the upper sections of the inner and outer groove walls 9A, 12 are both formed with a convex curve, when the tyre comes in contact with the ground, widened parts 18, 19 are formed, as shown in Fig. 9, before and after the ground-contacting centre of the ground contact area as the foot print. Such widened parts 18, 19 contribute greatly to preventing air column resonance while increasing the water draining performance. In addition, since the outer groove wall 12 is formed by a combination of the concave lower arc section 13 and the convex upper arc section 14, the rigidity in the shoulder parts 8 is heightened effectively, thereby improving steering stability.

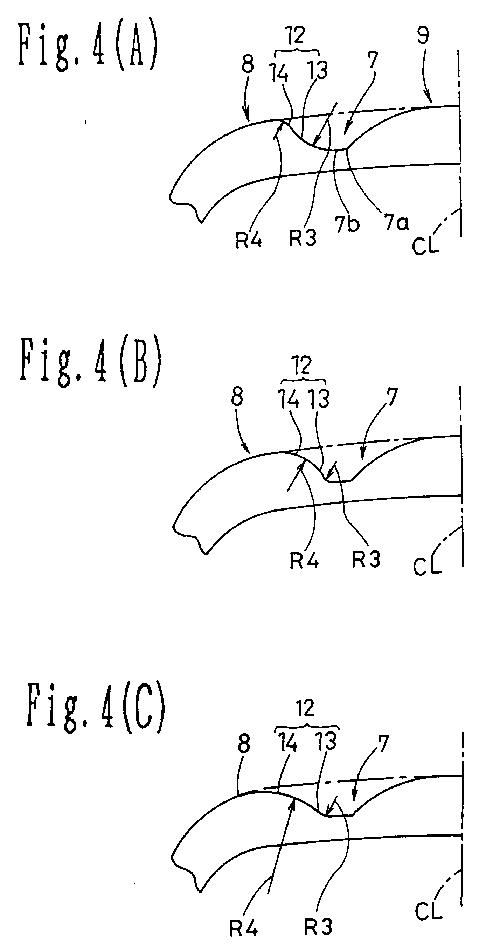

In the embodiment, the radius of curvature R4 is substantially equal to the radius of curvature R3 as shown in Figs. 1, 3. However, the radius of curvature R4 may be set smaller than the radius of curvature R3 as shown in Fig. 4(A), or larger than the radius of curvature R3 as shown in Fig. 4(B), or extremely larger than the radius of curvature R3 as shown in Fig. 4(C).

In forming the outer groove wall 12, by selecting the ratio of dimensional distribution of the radii of curvature R4, R3, any selected item of the tyre running performance factors such as wet grip performance, steering stability and the pass-by noise may be enhanced emphatically or each of them in good balance.

For example, if R3 > R4 as shown in Fig. 4(A), the water draining performance on a wet road is enhanced, and the wet grip performance is enhanced in particular.

Or, as shown in Fig. 4(B), where R3 < R4, the rigidity of the shoulder part 8 is heightened, and the steering stability is improved.

In the case where the radius of curvature R4 is extremely larger than the radius of curvature R3 as shown in Fig. 4(C), when the tyre contacts the ground, the relatively large widened part 19 is formed also at the outer groove wall 12, so that the pass-by noise is decreased very effectively.

When R3 is approximately equal to R4 as shown in Fig. 3, the wet grip performance and steering stability can be improved in good balance.

The radii of curvature R3, R4 of the upper and lower arc sections 14, 13 should be preferably at least 3 mm or more. If less than 3 mm, such effects may not be always achieved.

On the other hand, the groove width GW of the circumferential groove 7 is defined to be the distance in the tyre axial direction between the inner and outer groove walls 9A,12, at a radial position P above the groove bottom 7D by a distance of 2/3 times the groove depth D all in the new tyre state. The groove width GW is limited to be in the range from 35 mm to 0.35 times the ground-contacting tread width TW.

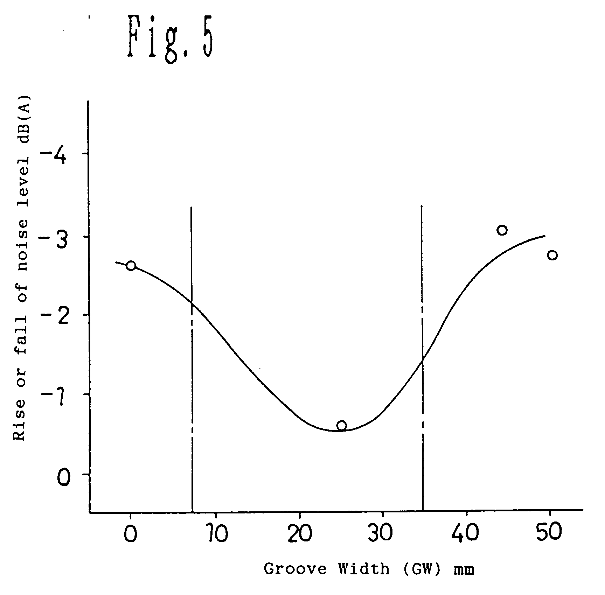

The groove width range was experimentally proven and is shown in Fig. 5. The contribution to decrease of pass-by noise was confirmed for the range. Since the pass-by noise is attributable to the air column resonance as mentioned above, it varies with the size of the groove width itself, regardless of the tyre size. Besides, if the groove width GW exceeds 0.35 times the ground contact width TW of the tread part, the ground contact pressure becomes excessive, and the wear resistance is inferior and the durability is lowered.

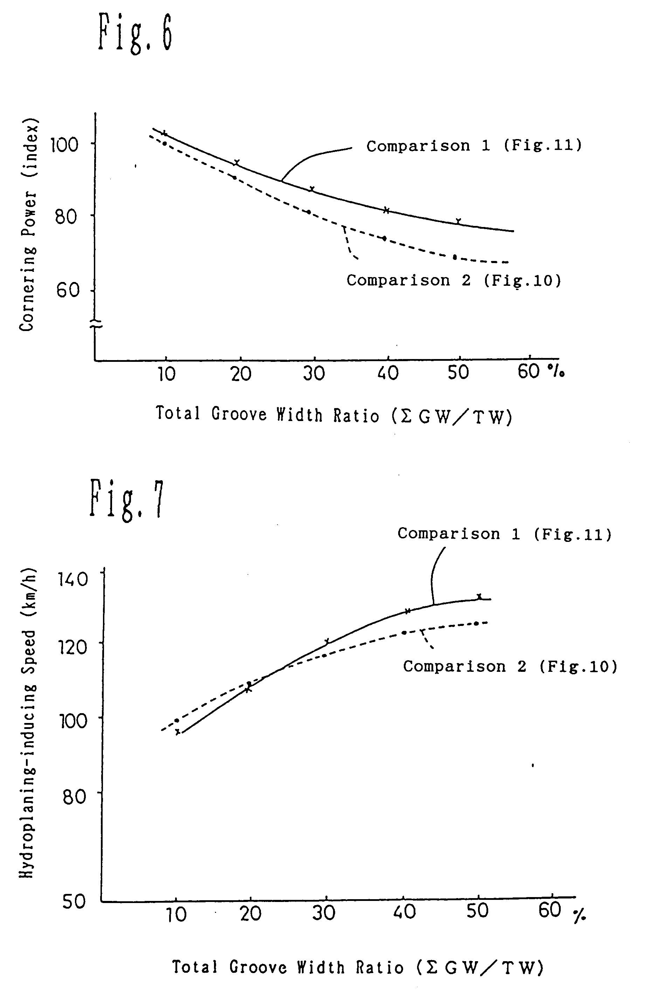

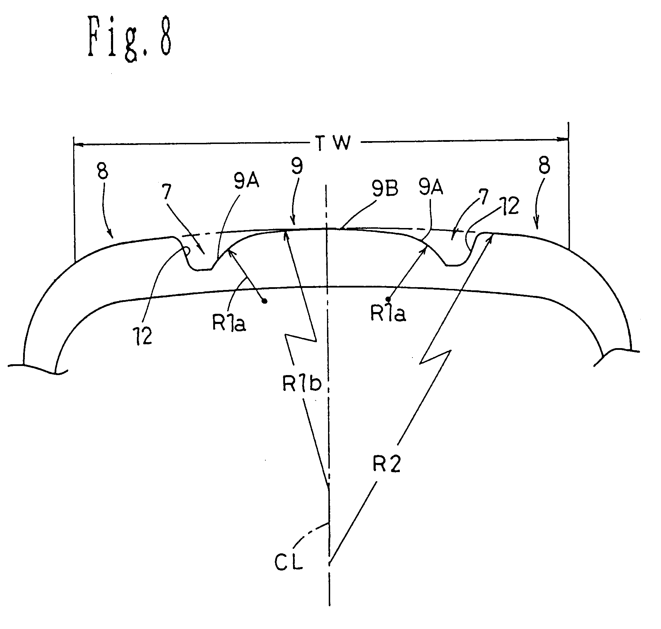

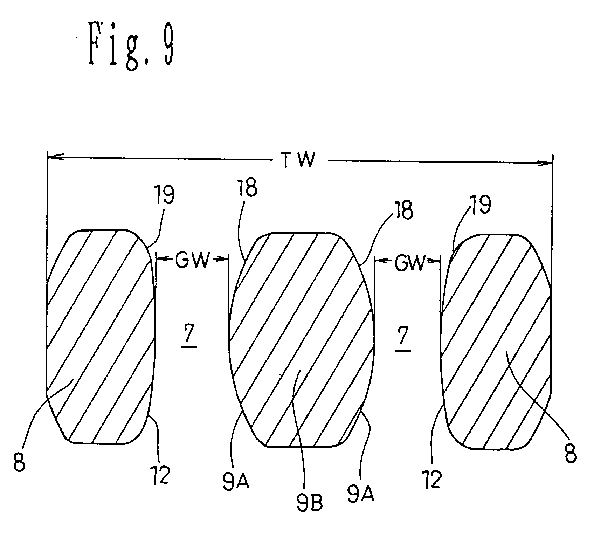

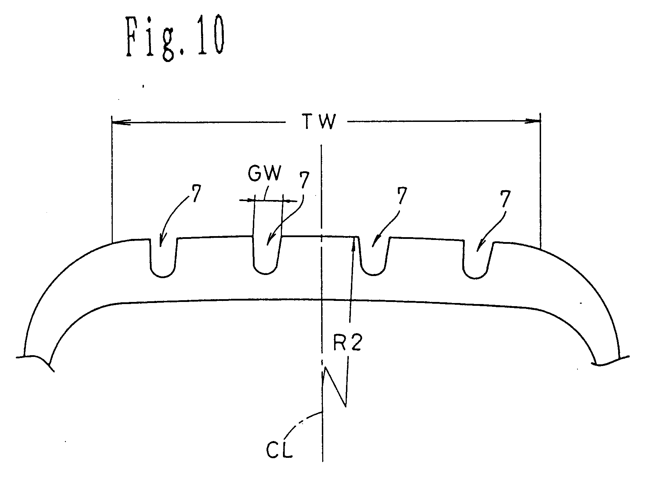

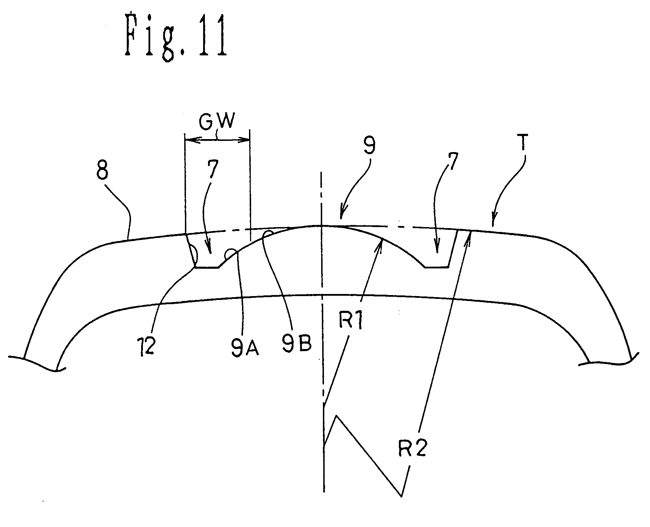

Regarding the circumferential grooves 7, it was found that a total groove width ratio 2GW/TW of a total groove width 2GW of the circumferential grooves 7 to the ground-contact tread width TW affects the cornering power and wet grip performance. Fig. 6 shows the result of measuring the cornering power of a tyre of 205/55 R15 in size with a central part in the form of a single arc as shown in Fig. 11 and a comparative prior art tyre with four circumferential grooves 7 as shown in Fig. 10 by changing the total groove width ratio $\Sigma$GW/TW. The cornering power was measured on a drum tester in the normal state. It was shown that the comparative tyre having a profile of Fig. 11 showed a higher value in comparison with the comparative tyre having a profile of Fig. 10. This is considered to be because, when the total groove width ratio defined as above is constant, the inner groove wall 9A of the convex curve as well as the upper arc section 14 contributes to increasing the tyre's lateral rigidity. However, when the total groove width ratio exceeds 50%, the cornering power is significantly reduced.

Fig. 7 shows the result of measuring, in a similar manner, the hydroplaning inducing speed. It was shown that the hydroplaning phenomenon occurred at a higher speed in the comparative tyre of Fig. 11, compared to the comparative tyre of Fig. 10. This is considered to be because the circumferential grooves 7 form widened parts 18 in the foot print as shown in Fig. 9, and this widened part 18 increases the draining performance. Thus, because of the noise, dry grip performance affected by the cornering power and wet grip performance by the hydroplaning phenomenon, the groove width ratio is preferably 15% or more, and the total groove width ratio 30 to 50%.

Incidentally, although the surface of the central part 9 is formed by a single arc in the embodiment shown in Fig. 1, it may be formed as a elliptical shape or a curve approximating to an ellipse.

Fig. 8 shows that the groove wall 9A and the central ground-contact surface 9B have different radii of curvature R1a, R1b. The radius of curvature R1a is less than the radius of curvature R1b of the central ground-contact surface 9B and the radius of curvature R2 of the virtual tread line 10, respectively, and the lowest limit thereof is preferably 5% or more of the ground-contact tread width TW. If it is less than 5%, the draining effect tends to be insufficient. The higher limit is at a value identical to the radius of curvature R1b, and the central surface is formed by a single arc in such case. The radius of curvature R1b can be close to and substantially the same as the radius of curvature R2 as far as the wet grip performance is not inferior. In addition, in order to decrease the emission of noise towards the outside of the car, the radius of curvature R1a of one inner groove wall 9A directed outwards of the car may be set greater than that of the other inner groove wall 9A.

In the embodiment, the central part 9 is provided with a circumferential narrow groove 20 continuously extending around the central ground-contacting surface 9B, for example at the centre of the central ground-contacting surface 9B, that is on the tyre equator CL. The circumferential narrow groove 20 has a groove width W1 of 1.5 to 7 mm and a groove depth D1 of 0.4 to 0.9 times the groove depth D of the circumferential grooves 7. The circumferential narrow groove 20 further increases the water draining performance of the central part 9 so as to improve wet grip performance, and provides a heat radiation effect, while maintaining high pattern rigidity and low noise characteristic. If the groove width W1 is more than 7.5 mm, and the groove depth D1 is more than 0.9 times the groove depth D, then columnar resonance is caused. If the groove depth D1 is less than 0.4 times the groove depth D, the heat radiation effect is insufficient.

In the embodiment, also, lateral grooves 21 and 22 are provided in the shoulder parts 8 and the central part 9 respectively. The lateral grooves 21 comprise grooves 25 which are terminated at both ends before the circumferential grooves 7,7 and the tread edges and grooves 26 which cross the shoulder parts 8 and connect to the respective circumferential grooves 7,7 and the respective tread edges. The grooves 25 and the grooves 26 are arranged alternately, so that a drop of the rigidity in the shoulder part 8 is prevented and that wet grip performance is improved. The lateral grooves 22 extend from a position of their inner ends spaced from tyre equator CL, and the outer ends thereof are connected to the circumferential grooves 7,7. Thus, because the lateral groove 22 is spaced from the tyre equator CL, the rigidity in the central part 9 is maintained, and steering stability is assured. In the lateral grooves 21,22, groove bottoms and inner end walls 21b,22b are substantially parallel to the belt layer 4 and the tyre equator CL respectively. Also, the groove walls thereof are inclined at an angle of 15 degrees or less to a line radially of the tyre, so that dimensional change of the lateral grooves 21,22 due to wear of the tyre is controlled and drop of wet grip performance is prevented. Incidentally, such other factors as the circumferential groove pitch and the groove depth of the lateral grooves 20,21 are selected according to the required purpose.

In the invention, the outer groove wall 12 may have an intervening straight part between the upper and lower arc sections 13,14, or the outer groove wall 12 itself may be formed in other curve than arc such as ellipse. Alternatively the central part 9 may deviate in position slightly in the tyre axial direction from the tyre equatorial plane, or the groove widths GW of the circumferential grooves 7 and the widths of the shoulder parts 8,8 in the tyre axial direction may be different on the right and the left side, and the invention may be modified in various modes.

As an example of the invention a tyre of 205/55R15 in size was produced according to the specifications shown in Table 1, and measured for pass-by noise, cornering power and hydroplaning-inducing speed. The results of the measurement were compared and shown in the Table. The tyres were tested and measured mounted on the regular rims R and inflated with regular internal pressure.

[table 1]

| | Embodiment | comparison 1 | comparison 2 |
|---|---|---|---|
| Tread profile | Fig.1, 3 | Fig.11 | Fig.10 |
| Ground-contacting Tread Width (TW) mm | 168 | 168 | 168 |
| Circumferential Groove; Number | 2 | 2 | 4 |
| Groove Width (GW) mm | 38 | 38 | 12×2 13×2 |
| Total Groove Width (ΣGW) mm | 76 | 76 | 50 |
| Ratio GW/TW % | 22.6 | 22.6 | 7.5 |
| Ratio (ΣGW/TW) % | 45 | 45 | 30 |
| Groove Depth (D) mm | 10 | 10 | 10 |
| Radius (R1) of the Central Surface mm | 85 | 85 | — |
| Radius (R2) of Virtual Tread Line mm | 520 | 520 | 520 |
| Radius (R3) of Concave arc in outer Groove Wall mm | 10 | — | — |
| Radius (R4) of Convex arc in outer Groove Wall mm | 10 | — | — |
| Pass-by Noise (dB(A)) | 71.2 | 71.5 | 74.5 |
| Cornering Power *1 | 102 | 97 | 100 |
| Hydroplaning-Inducing Speed *1 | 125 | 127 | 100 |

*1) Indicated as the index with the comparison 2 taken as 100.
The greater figure means the better performance.

## Claims

1. A pneumatic tyre (1) comprising a tread part (T) having two circumferential grooves (7) each with a groove bottom (7D) continuously extending in the circumferential direction on either side of the tyre's equator so as to divide the tread part (T) into a pair of shoulder parts (8), which are located outside outer bottom edges (7b) of the circumferential grooves (7) in the axial direction of tyre, and a central part (9), which is located between inner bottom edges (7a) of the circumferential grooves (7) in the axial direction of tyre; characterised in that the central part (9) has a surface comprising successive convex curves composed of a pair of inner groove walls (9A) extending inside, in the axial direction of tyre, along a curve convex outwardly in the radial direction from the inner bottom edges (7a) of the circumferential grooves (7) and a central ground-contacting surface (9B) smoothly connected between the pair of the inner groove walls (9A), the central ground-contacting surface (9B) is substantially in contact with a virtual tread line (10) between outer surfaces of the shoulder parts (8), the circumferential grooves (7) have an outer groove wall (12) extending outwards, in the axial direction of tyre, along a curve composed of at least two arc sections (13,14) from the outer bottom edges (7b) of the circumferential grooves (7) and smoothly connected to the outer surface of

6

the shoulder part (8), and have a groove width GW measured between the inner and outer groove walls (9A,12) at a radial position P above the groove bottom (7D) by a distance of 2/3 times the groove depth D of the circumferential groove (7), measured from the groove bottom (7D) to the virtual tread line (10), being not less than 35 mm and not more than 0.35 times a ground-contacting width TW of the tread.

2. A pneumatic tyre according to claim 1, characterised in that the curve of the outer groove wall (12) is composed of a concave lower arc section (13) with a radius of curvature R3 extending concavely outwardly in the radial direction from the outer bottom edge (7b) of the circumferential groove (7) and a convex upper arc section (14) with a radius of curvature R4 extending convexly outwardly in the radial direction and being in contact with the concave lower arc section (13) and the outer surface of the shoulder part (8).

3. A pneumatic tyre according to claim 2, characterised in that the radius of curvature R3 of the concave lower arc section (13) and the radius of curvature R4 of the convex upper arc section (14) are respectively in a range of 3 mm or more.

4. A pneumatic tyre according to claim 2 or 3, characterised in that the radius of curvature R3 of the concave lower arc section (13) is larger than the radius of curvature R4 of the convex upper arc section (14).

5. A pneumatic tyre according to claim 2 or 3, characterised in that the radius of curvature R3 of the concave lower arc section (!3) is smaller than the radius of curvature R4 of the convex upper arc section (14).

6. A pneumatic tyre according to claim 2 or 3, characterised in that the radius of curvature R3 of the concave lower arc section (13) is substantially equal to the radius of curvature R4 of the convex upper arc section (14).

**Patentansprüche**

1. Pneumatischer Reifen (1) umfassend einen Laufflächenteil (T), der zwei Umfangsrillen (7), jede mit einem Rillenboden (7D), aufweist, die sich auf jeder Seite des Äquators des Reifens kontinuierlich in der Umfangsrichtung erstrecken, um den Laufflächenteil (T) in ein Paar Schulterteile (8), die in der axialen Richtung des Reifens außerhalb äußerer Bodenränder (7b) der Umfangsrillen (7) angeordnet sind, und einen zentralen Teil (9) zu teilen, der in der axialen Richtung des Reifens zwischen inneren Bodenränder (7a) der Umfangsrillen (7) angeordnet ist;
dadurch **gekennzeichnet,**
daß der zentrale Teil (9) eine Oberfläche aufweist, die aufeinanderfolgende, konvexe, aus einem Paar innerer Rillenwände (9A) zusammengesetzte Kurven, die sich in der axialen Richtung des Reifens nach innen entlang einer Kurve in der radialen Richtung von den inneren Bodenrändern (7a) der Umfangsrillen (7) konvex nach außen erstrecken, und eine zentrale, bodenberührende, gleichmäßig zwischen dem Paar der inneren Rillenwände (9A) verbundene Oberfläche (9B) umfaßt, wobei die zentrale, bodenberührende Oberfläche (9B) im wesentlichen in Berührung mit einer gedachten Laufflächenlinie (10) zwischen äußeren Oberflächen der Schulterteile (8) ist, die Umfangsrillen (7) eine äußere Rillenwand (12) aufweisen, die sich in der axialen Richtung des Reifens nach außen entlang einer aus mindestens zwei Bogenteilabschnitten (13, 14) zusammengesetzten Kurve von den äußeren Bodenrändern (7b) der Umfangsrillen (7) und gleichmäßig mit der äußeren Oberfläche des Schulterteils (8) verbunden erstreckt, und eine zwischen den inneren und äußeren Rillenwänden (9A, 12) bei einer radialen Position P oberhalb des Rillenbodens (7D) in einem Abstand von 2/3 mal der von dem Rillenboden (7D) zu der gedachten Laufflächenlinie (10) gemessenen Rillentiefe D der Umfangsrille (7) gemessene Rillenbreite GW aufweisen, die nicht weniger als 35 mm und nicht mehr als 0,35 mal einer bodenberührenden Breite TW der Lauffläche beträgt.

2. Pneumatischer Reifen nach Anspruch 1,
dadurch **gekennzeichnet,**
daß die Kurve der äußeren Rillenwand (12) aus einem konkaven, unteren Bogenteilabschnitt (13) mit einem Krümmungsradius (R3), der sich in der radialen Richtung von dem äußeren Bodenrand (7b) der Umfangsrille (7) konkav nach außen erstreckt, und einem konvexen, oberen Bogenteilabschnitt (14) mit einem Krümmungsradius R4 zusammengesetzt ist, der sich in der radialen Richtung konvex nach außen erstreckt und in Berührung mit dem konkaven, unteren Bogenteilabschnitt (13) und der äußeren Oberfläche des Schulterteils (8) ist.

3. Pneumatischer Reifen nach Anspruch 2,
dadurch **gekennzeichnet,**
daß der Krümmungsradius R3 des konkaven, unteren Bogenteilabschnitts (13) und der Krümmungsradius R4 des konvexen, oberen Bogenteilabschnitts (14) jeweils in einem Bereich von 3 mm oder mehr liegen.

4. Pneumatischer Reifen nach Anspruch 2 oder 3,
dadurch **gekennzeichnet,**
daß der Krümmungsradius R3 des konkaven, unteren Bogenteilabschnitts (13) größer als der Krümmungsradius R4 des konvexen, oberen Bogenteilabschnitts (14) ist.

5. Pneumatischer Reifen nach Anspruch 2 oder 3,
dadurch **gekennzeichnet,**
daß der Krümmungsradius R3 des konkaven, unteren Bogenteilabschnitts (13) kleiner als der Krümmungsradius R4 des konvexen, oberen Bogenteilabschnitts (14) ist.

6. Pneumatischer Reifen nach Anspruch 2 oder 3,
dadurch **gekennzeichnet,**
daß der Krümmungsradius R3 des konkaven, unteren Bogenteilabschnitts (13) im wesentlichen gleich dem Krümmungsradius R4 des konvexen, oberen Bogenteilabschnitts (14) ist.

**Revendications**

1. Pneumatique (1) comprenant une partie (T) de bande de roulement ayant deux gorges circonférentielles (7) possédant chacune un fond (7D) s'étendant de façon continue dans la direction circonférentielle de part et d'autre de l'équateur du pneumatique afin que la partie (T) de bande de roulement soit divisée en deux parties (8) d'épaulement placées à l'extérieur des bords inférieurs externes (7b) des gorges circonférentielles (7) dans la direction axiale du pneumatique, et une partie centrale (9) placée entre des bords inférieurs internes (7a) des gorges circonférentielles (7) dans la direction axiale du pneumatique, caractérisé en ce que la partie centrale (9) a une surface comprenant des courbes convexes successives composées d'une paire de parois internes (9A) de gorge s'étendant vers l'intérieur, dans la direction axiale du pneumatique, le long d'une courbe convexe vers l'extérieur dans la direction radiale depuis les bords inférieurs internes (7a) des gorges circonférentielles (7) et une surface centrale (9B) de contact avec le sol raccordée progressivement entre les deux parois internes (9A) de gorge, la surface centrale (9B) de contact avec le sol est pratiquement au contact d'une ligne virtuelle (10) de bande de roulement entre les surfaces externes des parties d'épaulement (8), et les gorges circonférentielles (7) ont une paroi externe (12) de gorge qui s'étend vers l'extérieur, dans la direction axiale du pneumatique, le long d'une courbe composée d'au moins deux tronçons (13, 14) d'arc depuis les bords inférieurs externes (7b) des gorges circonférentielles (7) et raccordée progressivement à la surface externe de la partie d'épaulement (8), et ont une largeur de gorge GW mesurée entre les parois interne et externe de gorge (9A, 12) à une position radiale P au-dessus du fond (7D) de la gorge à une distance égale aux deux tiers de la profondeur D de la gorge circonférentielle (7), mesurée depuis le fond (7D) de la gorge jusqu'à la ligne virtuelle (10) de la bande de roulement, cette distance n'étant pas inférieure à 35 mm ni supérieure à 0,35 fois la largeur TW de contact avec le sol de la bande de roulement.

2. Pneumatique selon la revendication 1, caractérisé en ce que la courbe de la paroi externe (12) de gorge est composée d'un tronçon inférieur concave (13) d'arc ayant un rayon de courbure R3 disposé de façon concave vers l'extérieur dans la direction radiale depuis le bord inférieur externe (7b) de la gorge circonférentielle (7) et un tronçon supérieur convexe (14) d'arc ayant un rayon de courbure R4 disposé de façon convexe vers l'extérieur dans la direction radiale et placé au contact du tronçon inférieur concave (13) d'arc et de la surface externe de la partie d'épaulement (8).

3. Pneumatique selon la revendication 2, caractérisé en ce que le rayon de courbure R3 du tronçon inférieur concave (13) d'arc et le rayon de courbure R4 du tronçon supérieur convexe d'arc (14) sont supérieurs à 3 mm.

4. Pneumatique selon la revendication 2 ou 3, caractérisé en ce que le rayon de courbure R3 du tronçon inférieur concave (13) d'arc est supérieur au rayon de courbure R4 du tronçon supérieur convexe (14) d'arc.

5. Pneumatique selon la revendication 2 ou 3, caractérisé en ce que le rayon de courbure R3 du tronçon inférieur concave (13) d'arc est inférieur au rayon de courbure R4 du tronçon supérieur convexe (14) d'arc.

6. Pneumatique selon la revendication 2 ou 3, caractérisé en ce que le rayon de courbure R3 du tronçon inférieur concave (13) d'arc est pratiquement égal au rayon de courbure R4 du tronçon supérieur convexe (14) d'arc.

# Fig. 1

Fig. 2

EP 0 678 403 B1

Fig. 3

EP 0 678 403 B1

Fig. 4 (A)

Fig. 4 (B)

Fig. 4 (C)

# Fig. 5

Fig. 6

Comparison 1 (Fig.11)

Comparison 2 (Fig.10)

Total Groove Width Ratio (Σ GW/TW)

Fig. 7

Comparison 1 (Fig.11)

Comparison 2 (Fig.10)

Total Groove Width Ratio (Σ GW/TW)

# Fig.8

# Fig. 9

# Fig. 10

# Fig. 11